Europäisches Patentamt

**European Patent Office**

**Office européen des brevets**

(11) Numéro de publication: **0 141 723**
A2

(12) # DEMANDE DE BREVET EUROPEEN

(21) Numéro de dépôt: **84402120.4**

(51) Int. Cl.⁴: **G 02 B 6/44**

(22) Date de dépôt: **22.10.84**

(30) Priorité: **20.10.83 FR 8316708**

(43) Date de publication de la demande: **15.05.85**
**Bulletin 85/20**

(84) Etats contractants désignés: **AT BE CH FR GB IT LI NL SE**

(71) Demandeur: **SOCIETE INDUSTRIELLE DE LIAISONS ELECTRIQUES - SILEC, 64bis, rue de Monceau, F-75008 Paris (FR)**
Demandeur: **SOCIETE ANONYME DE TELECOMMUNICATIONS, 41, rue Cantagrel, F-75624 Paris Cedex 13 (FR)**

(72) Inventeur: **Cheron, 1, route de Flagy Saint-Ange le Vieil, F-77710 Lorez le Bocage (FR)**

(74) Mandataire: **Pinguet, André et al, NOVAPAT - CABINET CHEREAU 107 Boulevard Péreire, F-75017 Paris (FR)**

(54) **Procédé de fabrication d'un câble à fibres optiques ne comportant aucun matériau conducteur de l'électricité.**

(57) L'invention concerne un procédé de fabrication d'un câble à fibres optiques ne comportant pas de matériau conducteur de l'électricité et comportant autour de l'âme centrale (1) du câble un ensemble de protection constitué d'un revêtement de renfort (2), d'une armature (3), d'une gaine externe (4), le revêtement de renfort (2) étant réalisé par une machine d'extrusion dont le diamètre interne du tube extrudé est supérieur au diamètre externe de l'âme (1) du câble. Les dispositifs réalisant l'armature, la gaine externe et le tube de renfort étant entraînés par un dispositif de tirage (27) permettant de s'assurer que la vitesse de déplacement de l'ensemble de protection est identique à la vitesse de déplacement de l'âme du câble. Ce procédé permet de réaliser en continu et sans reprise d'opérations un câble à fibres optiques exempt de toute contrainte interne due au procédé de fabrication.

- 1 -

## PROCEDE DE FABRICATION D'UN CABLE A FIBRES OPTIQUES NE COMPORTANT AUCUN MATERIAU CONDUCTEUR DE L'ELECTRICITE

La présente invention concerne un procédé de fabrication d'un câble à fibres optiques ne comportant aucun matériau conducteur de l'électricité.

Il est connu de réaliser un câble à fibres optiques ne comportant aucun matériau conducteur de l'électricité. Ce nouveau type de câble à fibres optiques a été conçu pour remédier aux inconvénients, dus à des phénomènes électriques divers, présentés par les câbles fabriqués selon l'art antérieur, lesquels comportaient des éléments conducteurs de l'électricité. Parmi ces éléments conducteurs figurait un blindage mécanique protégeant le câble contre les contraintes radiales. Ce blindage était recouvert par une couche de matériau élastomère extrudé dont le retrait, lors du refroidissement dudit matériau après extrusion, n'avait pas de conséquence fâcheuse pour les caractéristiques des fibres optiques.

La fabrication de ce nouveau type de câble à fibres optiques ne va pas cependant sans poser quelques difficultés dues au fait que les matériaux constitutifs des revêtements externes, en particulier les matériaux thermopla

tiques subissent lors de leur refroidissement une contraction qui exerce une contrainte sur l'âme centrale du câble et par conséquent peuvent faire varier les longueurs des éléments les uns par rapport aux autres et induire ainsi des contraintes internes. Par ailleurs, du fait de la suppression du blindage mécanique continu, on ne dispose plus d'une barrière étanche à l'eau.

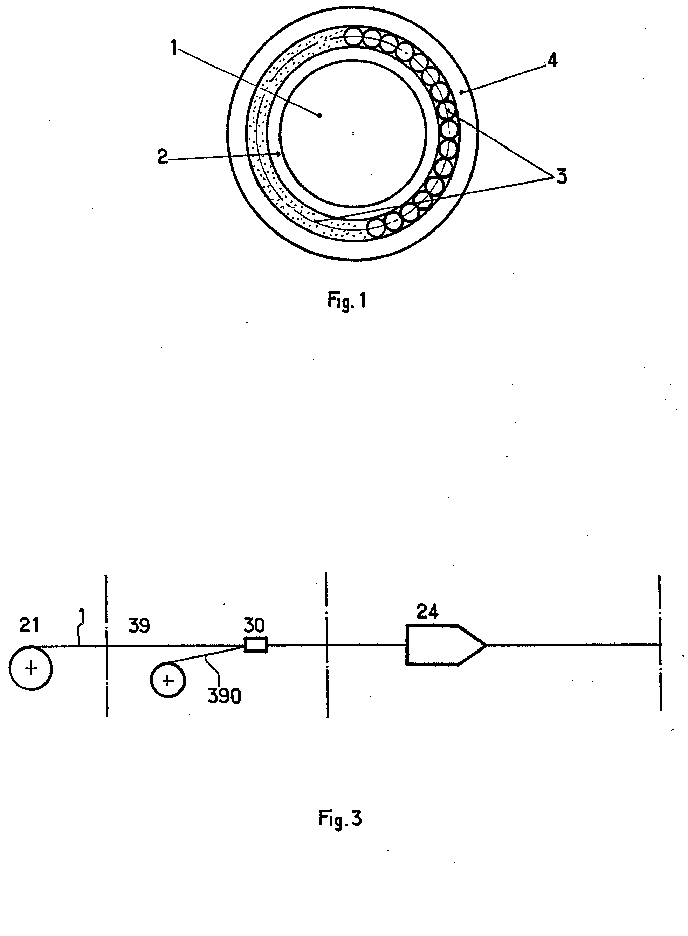

Ainsi, lorsque l'on veut produire un câble à fibres optiques tel que celui représenté à la figure 1, constitué d'une âme centrale comportant une pluralité de fibres optiques, d'un tube de renfort 2 entourant cette âme centrale, d'une armature 3 en matériau non conducteur de l'électricité et d'une gaine thermoplastique 4 enrobant le tout, on se heurte à ces problèmes de retrait lorsque l'on extrude la couche de renfort 2 et la gaine thermoplastique 4.

Par conséquent, même si l'on prévoit une traction sur l'âme centrale et une vitesse d'extrusion permettant après refroidissement d'obtenir une âme centrale enrobée d'un tube de renfort 2 sans contrainte, lorsque l'on passera à la pose de l'armature 3 et de la gaine 4, celles-ci lors du retrait radial de la gaine engendreront une contrainte sur le tube de renfort 2 et, par conséquent, sur l'âme du câble.

La présente invention a donc pour objet principal un procédé de fabrication permettant de pallier les inconvénients cités ci-dessus et de fabriquer un câble à fibres optiques exempt de contrainte et ne comportant aucun matériau conducteur.

Selon l'invention, le premier but est atteint par le fait que le procédé de fabrication d'un câble à fibres optiques comprenant une âme centrale 1 comportant une pluralité de fibres optiques et ne comportant aucun matériau conducteur de l'électricité comprend la réalisation d'un ensemble de protection en continu autour de l'âme centrale 1 entraînée en déplacement linéaire à vitesse constante, l'ensemble protecteur étant constitué dans l'ordre indiqué, d'un revêtement de renfort, d'une armature, d'une gaine externe, et l'ensemble de protection, n'étant pas solidaire ou étant partiellement solidaire de l'âme 1,est entraîné à la même vitesse que celle-ci.

Un deuxième but de l'invention est la réalisation d'un dispositif de mise en oeuvre du procédé selon le but principal.

Ce deuxième but est obtenu par le fait que le dispositif de mise en oeuvre du procédé comporte,disposée en ligne entre un dispositif dérouleur et un dispositif enrouleur assurant la vitesse de déplacement de l'âme du câble,une machine d'extrusion dont le diamètre interne du tube extrudé est supérieur au diamètre externe de l'âme,suivie d'un bac de refroidissement,un dispositif de pose d'une armature et une deuxième machine d'extrusion suivie d'un deuxième bac de refroidissement,et une machine assurant une traction sur l'ensemble de protection de façon que la vitesse de déplacement de l'ensemble de protection soit identique à la vitesse de déplacement de l'âme.

Le dispositif de mise en oeuvre du procédé permet également de réaliser l'étanchéité longitudinale du câble au niveau de l'âme comportant une ou plusieurs fibres optiques,ainsi que dans l'armature et sous le revêtement.

D'autres caractéristiques et avantages de la présente invention apparaîtront plus clairement à la lecture de la description ci-dessous faite en référence aux dessins annexés dans lesquels :

La figure 1 est une vue en coupe d'une âme comportant une ou plusieurs fibres optiques rendues étanches longitudinalement;

La figure 2 est une vue schématique de la chaîne de fabrication permettant la mise en oeuvre du procédé de fabrication de ces câbles;

La figure 3 est une vue schématique d'une variante d'une étape du procédé de fabrication de la figure 2;

La figure 4 est une vue schématique d'une variante d'une autre étape du procédé de fabrication de la figure 2

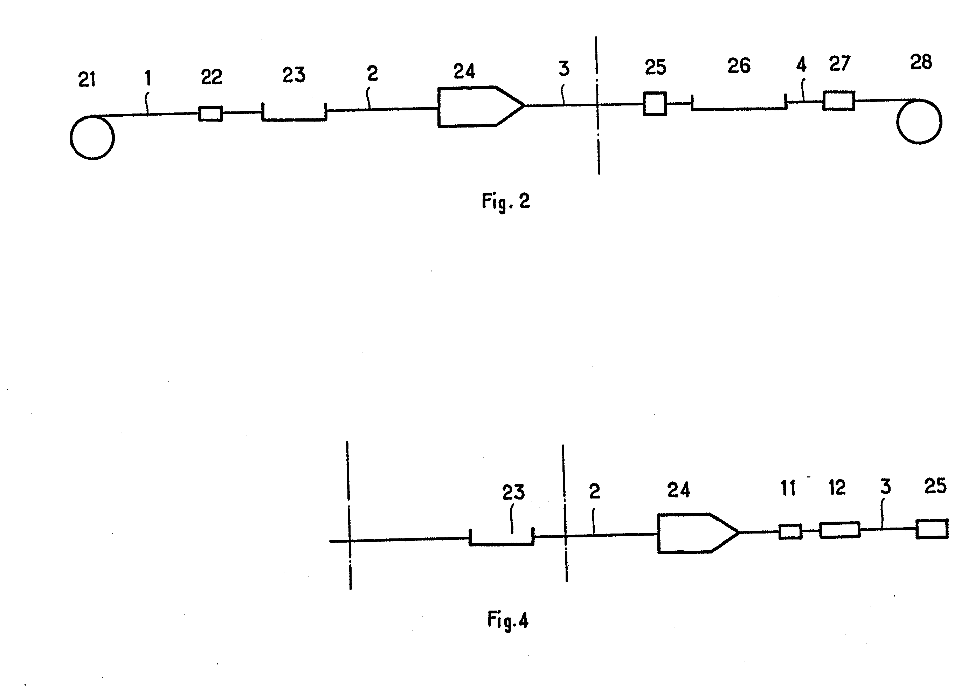

Le procédé de fabrication de la figure 2 permet d'obtenir en bout de ligne un câble à fibres optiques tel que celui représenté à la figure 1 dans lequel une âme 1 est constituée de fibres optiques disposées suivant la circonférence externe de l'âme autour soit d'une fibre centrale soit d'un jonc porteur central,non représenté.Cette âme est entourée d'un tube de renfort 2 constitué en matériau plastique tel que par exemple du polyéthylène de haute densité.Ce tube de renfort 2 est lui-même entouré d'une armature 3 constituée de porteurs monobrins,ou de fils rigidifiés à haute résistance mécanique ou bien de fibres ne présentant pas de résistance à la compression,mais qui par la suite sont solidarisées et rigidifiées par un liant.Cette armature 3 est elle-même entourée par une gaine thermoplastique 4 qui constitue la gaine externe.

Pour obtenir le câble à fibres optiques décrit en rapport avec la figure 1,on utilise de préférence le procédé de fabrication schématisé à la figure 2 dans lequel on trouve disposé de la gauche vers la droite un dérouleur 21 autour duquel est enroulée l'âme 1 du câble à fibres optiques,puis une extrudeuse 22 suivie de son bac de refroidissement 23,suivie d'une câbleuse à plusieurs brins 24,suivie d'une deuxième extrudeuse 25 accompagnée de son bac de refroidissement 26,suivie d'un dispositif de tirage 27 et enfin d'un dispositif enrouleur 28 sur lequel on enroule le câble à fibres optiques du type de la figure 1 obtenu en bout de chaîne.L'extrudeuse 22 avec son bac de refroidissement 23 permet de réaliser le tube de renfort 2 en matière thermoplastique. La câbleuse a plusieurs brins 24 permet de déposer les fils à haute résistance mécanique ou les porteurs monobrins.Ces fils ou porteurs peuvent être câblés soit dans le même sens soit en sens alterné selon le principe dit "SZ".Une deuxième unité d'extrusion 25, 26 permet de réaliser la gaine externe 4 en matière thermoplastique.

Dans la suite de la description,nous appellerons ensemble de protection,l'ensemble constitué par le tube de renfort 2,l'armature 3 et la gaine de thermoplastique externe 4.

Lors de la fabrication,le renfort tubulaire lorsqu'il sort de l'extrudeuse 22 subit dans le bac de refroidissement 23 un retrait.Ce renfort tubulaire introduit dans la câbleuse à plusieurs brins 24 subit lors de cette opération un tréfilage qui se traduit par un allongement du renfort tubulaire 2 ainsi que des monobrins ou fils rigidifiés constituant l'armature 3.Enfin, lors de la dernière opération d'extrusion,l'ensemble armature-tube de renfort est enrobé d'une gaine thermoplastique qui lors de son passage dans le bac de refroidissement subit un retrait.Lors de ces différentes opérations,on comprend donc que l'âme pourrait subir successivement des contraintes d'allongement et/ou de retrait suivant les opérations successives de fabrication auxquelles il est soumis.Un des avantages du procédé de la présente invention est justement d'obtenir en fin de ligne de fabrication un câble dont l'âme comprenant les fibres optiques n'est soumise à aucune contrainte résultante. Pour ce faire,l'extrudeuse 22 réalise autour de l'âme du câble un tube de renfort 2 dont le diamètre interne est supérieur au diamètre externe de l'âme 1.Ceci permet donc à l'âme 1 du câble de coulisser dans l'ensemble de protection au cours de la fabrication de celui-ci et ainsi se soustraire aux différentes contraintes auxquelles l'âme aurait pu être soumise.Par ailleurs, l'élément de tirage 27 permet d'exercer une traction sur l'ensemble de protection constitué par les différents éléments gaine externe 4,armature 3,renfort tubulaire 2.Cette traction exercée sur l'ensemble de protection permet de résorber les différentes contraintes qui ont été appliquées aux différentes couches de l'ensemble de protection lors du processus de fabrication. Ainsi,en sortie de l'élément de tirage,l'ensemble de protection est pratiquement exempt de contrainte interne et l'élément de tirage 27 permet de s'assurer que la vitesse de sortie de l'ensemble de protection est égale à la vitesse d'avancement de l'âme 1 du câble et que les vitesses sont constantes.D'autre part,pour que l'âme du câble coulisse dar l'ensemble de protection,on devra choisir comme on l'a indiqué précédemment,le rapport entre le diamètre interne d tube de renfort 2 et le diamètre externe de l'âme 1 en fonction de la longueur de la ligne de fabrication et des coefficients d'adhérence des matériaux en présence.

La figure 3 représente une variante de réalisation de l'étape correspondant à la fabrication du renfort tubulaire,étape représentée par les appareils 22 et 23 à la figure 2.Sur cette figure,on a conservé les mêmes références que celles de la figure 2 pour les dispositifs qui étaient identiques.Comme on peut le voir,un enrouleur 21 déroule l'âme du câble 1 en direction d'un appareil 30 réalisant l'enroulage suivant un grand pas d'un film en polyester 390,ou tout autre matériau plastique délivré par un enrouleur 39.Le film 390 est enroulé à grand pas autour d'un manchon,non représenté,dont le diamètre externe est supérieur au diamètre externe de l'âme du câble.Ce film est ensuite maintenu soit par collage soit par ligaturage, ces opérations étant effectuées par le dispositif 30.Par la suite,on retrouve le dispositif réalisant l'armature 24.

La figure 4 représente une variante de réalisation de l'armature après l'étape de fabrication du renfort tubulaire.De même que précédemment,nous avons gardé pour les étapes identiques à celles de la figure 2 la même numérotation.Après l'étape de refroidissement 23,le tube de renfort 2 est acheminé vers l'appareil 24 permettant de disposer autour de ce tube des fibres n'ayant pas de résistance à la compression.L'ensemble est ensuite acheminé vers un dispositif 11 de pose d'un liant puis vers un four de séchage 12.Enfin, le tube de renfort 2 muni de son armature 3 est acheminé comme dans le procédé classique vers la deuxième extrudeuse 25.Dans cette variante,l'ensemble des fibres est solidarisé et rigidifié par un liant tel que la résine de polyester déposée par trempage ou injection dans le dispositif 11.

Bien entendu,comme dans le cas de la figure 2, les dispositifs mis en oeuvre dans les variantes sont synchronisés à partir de l'élément de tirage 27.

D'autres variantes font également partie de l'invention,ainsi l'étanchéité longitudinale du câble peut être obtenue par une opération supplémentaire introduisant des produits de remplissage ou des produits gonflant en présence d'eau entre l'âme du câble 1 et le tube de renfort 2 et dans l'ensemble de protection constitué par l'armature 3 et la gaine externe 4.

La présente invention n'est pas limitée aux exemples de réalisation qui viennent d'être décrits, elle est au contraire susceptible de modifications et de variantes qui apparaîtront à l'homme de l'art.

8.

0141723

REVENDICATIONS

1 - Procédé de fabrication d'un câble à fibres optiques comprenant une âme centrale comportant une ou plusieurs fibres optiques et ne comportant aucun matériau conducteur de l'électricité,caractérisé en ce qu'on réalise en continu autour de l'âme centrale, entraînée en déplacement linéaire à vitesse constante, un ensemble de protection constitué dans l'ordre indiqué d'un revêtement de renfort (2), d'une armature (3), d'une gaine externe (4) et que l'ensemble de protection n'est pas solidaire de l'âme (1) et est entraîné à la même vitesse que celle-ci.

2 - Procédé selon la revendication 1,caractérisé en ce que le revêtement de renfort (2) est constitué par un film en matériau plastique (390) enroulé suivant un grand pas,et maintenu par collage ou ligaturage.

3 - Procédé selon la revendication 1,caractérisé en ce que l'armature (3) est constituée de fibres n'ayant pas de résistance à la compression rigidifiée par un liant.

4 - Procédé selon la revendication 1,caractérisé en ce que la gaine externe (4) est obtenue par extrusion.

5 - Procédé selon la revendication 4, caractérisé en ce que le revêtement de renfort (2) est obtenu par extrusion.

6 - Procédé selon les revendications 1 à 5,caractérisé par le fait que l'étanchéité longitudinale du câble peut être obtenue en introduisant des produits de remplissage ou des produits gonflant en présence d'eau entre l'âme du câble (1) et le tube de renfort (2) et dans l'ensemble de protection (3 et 4).

7 - Dispositif de mise en oeuvre du procédé selon la revendication 5,caractérisé en ce qu'on dispose en ligne,entre un dispositif dérouleur (21) et un dispositif enrouleur (28) assurant la vitesse de déplacement de l'âme (1) du câble,une machine d'extrusion (22) dont le diamètre interne du tube extrudé est supérieur au diamètre externe de l'âme (1), suivi d'un bac de refroidissement (23), un dispositif (24) de pose d'une armature (4) et une deuxième

9.

0141723

machine d'extrusion (25) suivie d'un deuxième bac de refroidissement (26) et une machine (27) assurant une traction sur l'ensemble de protection de façon que la vitesse
de déplacement de l'ensemble de protection soit identique
à la vitesse de déplacement de l'âme.

0141723

PL. I/2

Fig. 1

Fig. 3

PL.II/2

Fig. 2

Fig. 4